(19)

**Europäisches Patentamt**
**European Patent Office**
**Office européen des brevets**

(11) **EP 3 152 467 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **15775074.6**

(22) Anmeldetag: **05.06.2015**

(51) Internationale Patentklassifikation (IPC):
**F16H 57/08** *(2006.01)*

(52) Gemeinsame Patentklassifikation (CPC):
**F16H 57/082**

(86) Internationale Anmeldenummer:
**PCT/DE2015/000275**

(87) Internationale Veröffentlichungsnummer:
**WO 2015/188803 (17.12.2015 Gazette 2015/50)**

(54) **UMLAUFGETRIEBE MIT ZWEI SONNENRÄDERN UND VERZAHNUNGSSPIELMINIMIERUNG**

PLANETARY GEARBOX WITH TWO SUN WHEELS AND MINIMUM TEETH PLAY

ENGRENAGE ÉPICYCLOÏDAL À DEUX ROUES SOLAIRES AVEC MINIMISATION DU JEU D'ENGRÈNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2014 DE 102014008143**

(43) Veröffentlichungstag der Anmeldung:
**12.04.2017 Patentblatt 2017/15**

(73) Patentinhaber:
• **Zimmer, Günther**
**77866 Rheinau (DE)**
• **Zimmer, Martin**
**77866 Rheinau (DE)**

(72) Erfinder:
• **Zimmer, Günther**
**77866 Rheinau (DE)**
• **Zimmer, Martin**
**77866 Rheinau (DE)**

(74) Vertreter: **Thämer, Wolfgang**
**Zürn & Thämer**
**Patentanwälte**
**Adalbert-Stifter-Straße 12**
**76275 Ettlingen (DE)**

(56) Entgegenhaltungen:
EP-A1- 0 084 197      WO-A1-2009/106222
WO-A1-2012/036033      JP-A- H08 170 695
US-A1- 2013 150 205      US-B2- 6 705 970

• **LOOMAN J: "PARAGRAPH 3.7: BELASTUNGSAUSGLEICH IN PLANETENGETRIEBEN", ZAHNRADGETRIEBE. GRUNDLAGEN, KONSTRUKTIONEN, ANWENDUNGEN INFAHRZEUGEN, SPRINGER VERLAG, BERLIN, DE, vol. 26 (3RD. ED), 1 January 1996 (1996-01-01), pages 118 - 125, XP009083234**

**Beschreibung**

Die Erfindung betrifft einen Antrieb mit einem in einem Gehäuse integrierten, ins Langsame übersetzenden Umlaufgetriebe, wobei ein Antriebsmotor auf einen mindestens zwei Planeten lagernden Umlaufsteg wirkt, dessen einzelne Planeten zum einen an einem im Gehäuse drehfest angeordneten außenverzahnten Sonnenrad und zum anderen an einem abtreibenden außenverzahnten Sonnenrad abrollen, wobei das Subtrahieren der Zähnezahl des abtreibenden Sonnenrades von der Zähnezahl des drehfest angeordneten Sonnenrades eine geradzahlige natürliche Zahl als Differenzzähnezahl $z_{Diff}$ ergibt, wobei alle Planeten die gleiche Zähnezahl aufweisen, wobei mindestens ein Sonnenrad eine positive oder eine negative Profilverschiebung aufweist oder wobei neben der oder den Profilverschiebungen der Sonnenräder der einzelne Planet für das jeweilige Kämmen mit dem einzelnen Sonnenrad eine separate Verzahnung hat und beide Verzahnungen - bei gleicher Zähnezahl - mindestens eine Verzahnung haben, die eine positive oder eine negative Profilverschiebung aufweist.

Es besteht ein Bedarf an Antrieben, bei denen in einem gemeinsamen Gehäuse ein Antriebsmotor und ein Stirnrädergetriebe mittlerer Übersetzung untergebracht sind. Als mittlere Übersetzungen ins Langsame werden hier Übersetzungen bezeichnet, bei denen auf eine Abtriebswellendrehung 20 bis 150 Antriebsumdrehungen des Motors erforderlich sind.

Aus der DE 39 41 719 A1 ist ein Planetengetriebe für sehr große Übersetzungen ins Langsame bekannt, bei dem um ein antreibendes Sonnenrad mehrere auf einem Steg gelagerte Planeten umlaufen. Die Planeten sind so breit, dass sie mit zwei koaxial nebeneinander angeordneten, innenverzahnten Hohlrädern zugleich kämmen. Eines der Hohlräder ist drehstarr im Getriebegehäuse gelagert, während das andere Hohlrad als Abtriebsrad dient. Beide Hohlräder haben bei unterschiedlichen Zähnezahlen den gleichen Modul und mindestens ein Hohlrad weist eine Profilverschiebung auf.

Die US 6 705 970 B2 beschreibt u.a. ein Differentialumlaufgetriebe, bei dem ein elektromotorisch angetriebener Steg über seine Umlaufräder jeweils mit zwei Sonnenrädern kämmt, wobei ein Sonnenrad als Abtrieb wirkt, während das andere Sonnenrad am Getriebegehäuse abgestützt ist. Der Motor, der Steg und die Sonnenräder sind räumlich hintereinander angeordnet.

Aus der JP H08 170 695 A ist ein Planetengetriebe mit mindestens vier Planeten bekannt, von denen jeweils zwei auf einem eigenen Steg gelagert sind. Beide Stege sind gegeneinander verdrehbar angeordnet. In einer anderen Variante sind die Planeten - bezogen auf ihre Mittellinien - im Steg in Umfangs- und in Radialrichtung federnd gelagert.

Der vorliegenden Erfindung liegt die Problemstellung zugrunde, einen Antrieb zu entwickeln, der bei geringem Bauraumbedarf ohne die Verwendung eines Schnecken- oder Schraubradgetriebes eine nahezu spielfreie Übersetzung ins Langsame ermöglicht.

Diese Problemstellung wird mit den Merkmalen der Anspruchs 1 gelöst. Dazu ist die Gesamtzahl $p_{ges}$ der Planeten größer als die Differenzzähnezahl $z_{Diff}$. Bei einer Teilanzahl $p_v$ der Gesamtzahl $p_{ges}$ der Planeten mit $p_v = p_{ges} - z_{Diff}$ sind die jeweiligen separaten Verzahnungen pro Planet in Umlaufrichtung - hinter jedem Planet ohne Verzahnungsverschwenkung - hintereinander jeweils - gegenüber dem vorderen - um einen Versatzwinkel $\delta$ verschwenkt. Der Versatzwinkel $\delta$ ergibt sich aus der Formel $\delta = \tau * (z_{Diff}/p_{ges}) * (z_{S1}/z_{P1})$, mit $\tau$ als Teilungswinkel des ersten Sonnenrades, $z_{S1}$ als Zähnezahl des ersten Sonnenrades und $z_{P1}$ als Zähnezahl der Planeten. Außerdem sind zum Minimieren des Verzahnungsspiels zwei zueinander benachbarte oder miteinander kämmende Zahnräder des Umlaufgetriebes - unabhängig von den regulären getriebetechnischen Bewegungsvorgängen - relativ zueinander verschiebbar angeordnet.

Das Subtrahieren der Zähnezahl des abtreibenden zweiten Sonnenrades von der Zähnezahl des drehfest angeordneten ersten Sonnenrades ergibt eine einstellige, geradzahlige und natürliche Zahl als Differenzzähnezahl. Zum Minimieren des Verzahnungsspiels sind - unabhängig von den regulären getriebetechnischen Bewegungsvorgängen - entweder zwei zueinander benachbarte Zahnräder des Umlaufgetriebes gegeneinander federnd verdrehbar oder zwei miteinander kämmende Zahnräder des Umlaufgetriebes relativ zueinander radial federnd verschiebbar angeordnet.

Mit der vorliegenden Erfindung wird ein Antrieb mit einem integrierten hohlradfreiem Umlaufgetriebe geschaffen, der bei kleinem Bauraum eine große Übersetzung aufweist, über eine Leistungsverzweigung verfügt und zudem ein nahezu verzahnungs- und lagerspielfreies Rädergetriebe aufweist.

Bei einem herkömmlichen Rädergetriebe bewegen sich die Zahnräder untereinander in einem sogenannten Zwangslauf. Jedes Zahnrad hat einsprechend seiner Position innerhalb des Getriebes eine Drehzahl, die in einem bestimmten Verhältnis zu den anderen Getrieberädern steht. Unter einem regulären getriebetechnischen Bewegungsvorgang werden alle getriebetechnischen Abroll- bzw. Kämmvorgänge subsummiert. Als nicht reguläre, getriebetechnische Bewegungsvorgänge werden z.B. Zahnradquerbewegungen - wie sie bei Schaltvorgängen vorkommen - verstanden.

Weitere Einzelheiten der Erfindung ergeben sich aus den Unteransprüchen und der nachfolgenden Beschreibung schematisch dargestellter Ausführungsformen.

Figur 1: Perspektivische Ansicht eines Antriebes mit einer Hohlwelle;

Figur 2: Perspektivische Unteransicht des Antriebes aus Figur 1, jedoch mit abgenommenem Gehäuseteil;

Figur 3: halber Querschnitt eines mit Figur 1 ver-

Figur 4: Perspektivische Getriebeschemaansicht des im Antrieb nach Figur 1 verwendeten Umlaufgetriebes;

Figur 5: wie Figur 4; jedoch mit der doppelten Leistungsverzweigung;

Figur 6: Perspektivische Ansicht eines Planetenlagers aus Figur 2, Unteransicht;

Figur 7: Längsschnitt eines Planeten mit gegeneinander verspannten Planetenteilen;

Figur 8: Querschnitt zu Figur 7;

Figur 9: versetzter Längsschnitt zu Figur 7, jedoch zusätzlich um 90 Winkelgrade geschwenkt;

Figur 10: wie Figur 5; jedoch mit einer Verschwenkung eines Teils der Planetenlagerbolzen;

Figur 11: Perspektivische Ansicht eines weiteren Antriebes mit einer Hohlwelle, jedoch ohne Sonnenträger;

Figur 12: halber Querschnitt des Antriebs nach Figur 11;

Figur 13: Lagerbolzenträger in Draufsicht im Umlaufsteg.

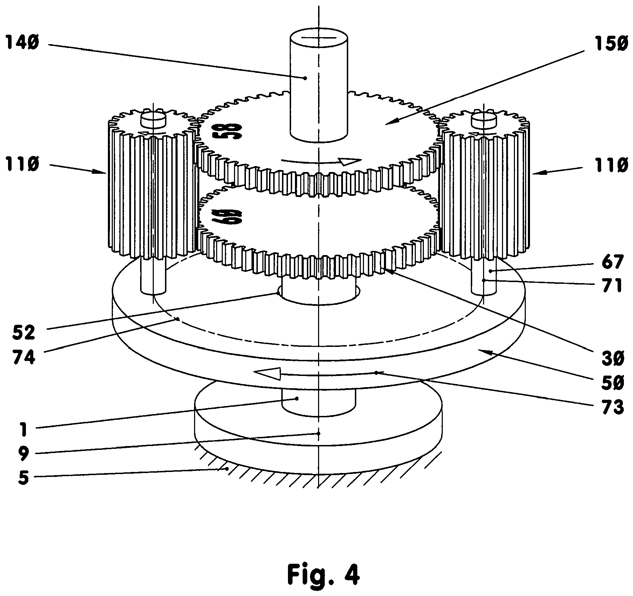

Die Figur 4 zeigt vereinfacht das Schema eines Umlaufgetriebes mit großer Untersetzung bzw. großer Übersetzung ins Langsame. Ein erstes, ortsfestes Sonnenrad (30) ist über eine Achse (1) starr am Untergrund (5) befestigt. Zwischen dem ortsfesten Sonnenrad (30) und dem Untergrund (5) ist ein Umlaufsteg (50) in Form einer Scheibe angeordnet. Über seine zentrale Bohrung (52) ist die Scheibe ggf. auf der Achse (1) drehbar gelagert. Der anzutreibende Umlaufsteg (50) trägt zwei zur Mittellinie (9) der Achse (1) parallele Lagerbolzen (67). Die Mittellinien (71) der Lagerbolzen (67) liegen zusammen mit der Getriebemittellinie (9) in einer Ebene.

Auf jedem Lagerbolzen (67) ist drehbar ein Planet (110) gelagert. Jeder Planet (110) kämmt mit dem ersten Sonnenrad (30). Bei einem Getriebe mit langsam umlaufendem Umlaufsteg (50) kann auch nur ein Planet (110) auf dem Umlaufsteg (50) angeordnet sein.

Oberhalb des ersten Sonnenrades (30) ist ein zweites Sonnenrad (150) angeordnet, dessen Mittellinie deckungsgleich zur Mittellinie des ersten Sonnenrades (30) verläuft. Das Sonnenrad (150) wirkt auf eine Abtriebswelle (140). Das zweite Sonnenrad (150) hat hier zwei Zähne weniger als das erste Sonnenrad (30). Auch das zweite Sonnenrad (150) kämmt mit den Planeten (110). Um trotz unterschiedlicher Zähnezahlen der Sonnenräder (30, 150) ein einwandfreies Kämmen mit den Planeten (110) zu realisieren, gibt es mehrere Möglichkeiten. Erstens kann das erste Sonnenrad (30) ein V-Minus-Rad sein, während das zweite Sonnenrad (150) ein V-Null-Rad ist. Zweitens kann das ortsfeste Sonnenrad (30) ein V-Null-Rad und das abtreibende Sonnenrad (150) ein V-Minus-Rad sein. Drittens können beide Sonnenräder (30, 150) eine Profilverschiebung haben, wobei dann das erste Sonnenrad (30) eine negative und das zweite Sonnenrad (150) eine positive Profilverschiebung aufweist.

Die Übersetzung des Umlaufgetriebes, also das Drehzahlverhältnis zwischen dem angetriebenen Umlaufsteg (50) und der abtreibenden Abtriebswelle (140), errechnet sich aus einem Quotienten, dessen Dividend die Zähnezahl des zweiten, abtreibenden Sonnenrades ist, während dessen Divisor die Differenz aus der Zähnezahl des ersten, ortsfesten Sonnenrades (30) und des zweiten Sonnenrades (150) ist. Da hier das zweite, abtreibende Sonnenrad (150) 58 Zähne hat, während das erste 60 Zähne aufweist, ist i = 58/(60-58). Die Zähnezahl der Planeten (110) ist von untergeordneter Bedeutung. Sie sollte größer sein als die sogenannte Grenzzähnezahl nach DIN 3960.

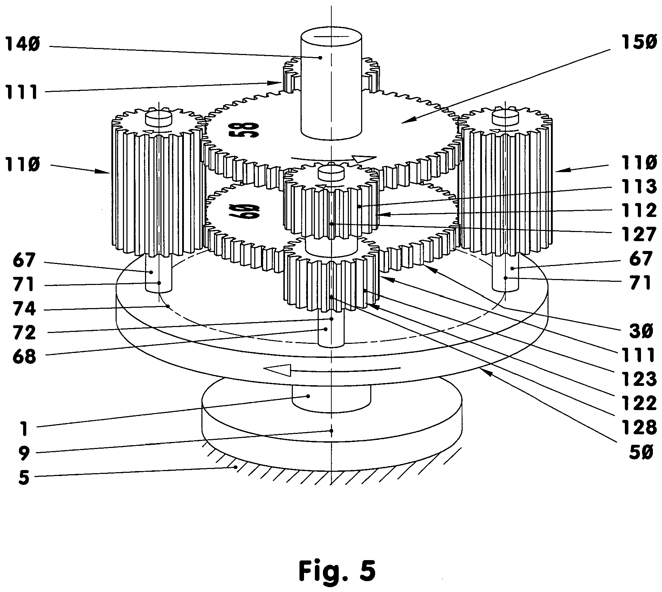

Die Figur 5 zeigt ein Getriebe, bei dem die übertragbare Leistung gegenüber dem Getriebe aus Figur 4 durch eine Leistungsverzweigung verdoppelt wird. Dazu trägt der Umlaufsteg (50) zusätzlich zwei auf weiteren Lagerbolzen (68) gelagerte Planeten (111). Auch diese Planeten (111) haben Mittellinien (72), die zum einen parallel zur Hauptmittellinie (9) des Getriebes und zum anderen mit dieser (9) in einer Ebene liegen. Zudem schneidet sich diese Ebene senkrecht mit derjenigen Ebene, die durch die beiden Mittellinien (71) der Planeten (110) gebildet wird, wobei die Schnittgerade der beiden Ebenen die Hauptmittellinie (9) ist.

Um ein Kämmen mit beiden außenverzahnten Sonnenrädern (30, 150) zu ermöglichen, sind die neu hinzugekommenen Planeten (111) in zwei Teilplanete (112, 122) aufgeteilt, wobei jeder Teilplanet (112, 122) mit einer eigenen zur Verzahnung des anderen u.a. auch versetzten Verzahnung (113, 123) ausgestattet ist. Bei identischem Modul und gleicher Zähnezahl sind die Verzahnungen (113, 123) im Ausführungsbeispiel um den halben Teilungswinkel $\tau$ gegeneinander verschwenkt verzahnt.

Wie am vorderen Planet (111) deutlich erkennbar ist, sitzt über jeder Zahnlücke (128) der unteren Verzahnung (123) ein Zahn (127) der oberen Verzahnung (113). Alternativ können die neu hinzugekommenen Planeten (111) z.B. im Wesentlichen zweiteilig - nach Figur 5 - als oberer (112) und unterer Teilplanet (122) gefertigt sein, wobei beide Teilplaneten (112, 122) - um den halben Teilungswinkel versetzt - starr miteinander verbunden, z.B. verschraubt sind.

Der Versatzwinkel $\delta$ zwischen den beiden versetzten Verzahnungen (113, 123) pro Teilplanet (112, 122) errechnet sich aus

$$\delta = k * \tau * (z_{S1}/z_{Pl}),$$

wobei $\tau$ der Teilungswinkel des ersten Sonnenrades (30) nach DIN 3960 ist, $z_{S1}$ die Zähnezahl des ersten Sonnenrades (30), $z_{Pl}$ die Zähnezahl der Teilplaneten (112, 122) bezeichnet und

$$k = z_{Diff}/p$$

beträgt. $z_{Diff}$ ist die Differenz aus der Zähnezahl des ersten, ortsfesten Sonnenrads (30) und des zweiten, abtreibenden Sonnenrads (150). p ist die Anzahl der Planeten (110, 111).

Hat nach Figur 5 das erste Sonnenrad (30) z. B. 60 Zähne und das zweite (150) 58 Zähne und die Planeten (110, 111) 20 Zähne, so ist k = 1/2, $(z_{S1}/z_{Pl})$ = 3 und δ = 9°.

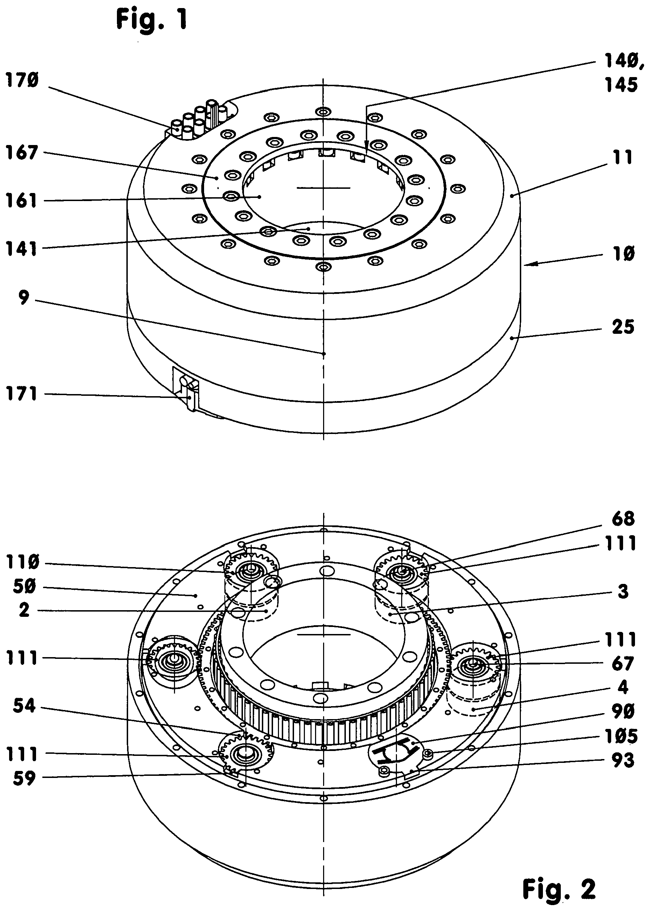

Die Figuren 1 bis 3 zeigen eine Ausführungsform eines ringförmigen Antriebs, die das in Figur 5 dargestellte Getriebeschema zusammen mit einem Elektromotor (40) in einem Gehäuse (10) unterbringt. Als Abtrieb dient eine z.B. mehrteilige Hohlwelle (140), die in dem sie radial umgebenden ebenfalls z.B. mehrteiligen ortsfest montierbaren Gehäuse (10) gelagert und geführt ist.

Das Gehäuse (10) besteht aus einem Statorträger (11) und einem Sonnenträger (25), vgl. auch Figur 1. Beide miteinander verschraubten Gehäuseteile (11, 25) haben z.B. bei einen gemeinsamen Durchmesser von 190 mm und eine Länge von 85 mm. Die Hohlwelle (140) überragt die Breite des Gehäuses (10) z.B. um einige Zehntel Millimeter. Die Hohlwelle (140) hat eine zentrale Bohrung (145), deren Durchmesser mindestens 40% des maximalen Gehäusedurchmessers misst. Hier beträgt der Durchmesser z.B. 78 mm.

Der Statorträger (11) hat die Form eines Topfes, der im Boden eine zentrale Stufenbohrung (15) aufweist. In der Stufenbohrung (15) ist als Kombilager des Antriebs z.B. der Außenring (22) eines Kreuzrollenlagers (21) angeordnet. Der Außenring (22) ist axial fixiert zwischen einem einen Gehäusering (14) begrenzenden planen Gehäusebund (16) der Stufenbohrung (15) und einem Klemmring (17). Der im Gehäuse (10) angeordnete Klemmring (17) ist mit dem Statorträger (11) verschraubt.

Zwischen dem das lagerspielfreie Kombilager (21) radial stützenden Gehäusering (14), an dem der Klemmring (17) axial anliegt, und dem Außenbereich (12) des Statorträgers (11) ist der ringförmige Stator (41) des Motors (40) angeordnet. Die Blechpakete (43) des Stators (41) ragen zur Hauptmittellinie (9) hin. Der Statorträger (11) hat im Bereich der Statorlagerung beispielsweise radiale Kühlrippen (13).

Am Statorträger (11) ist der Sonnenträger (25) entlang einer umlaufenden, zentrierenden Montagefuge angeschraubt. Auch der Sonnenträger (25) hat die Form eines Topfes mit zentraler Bohrung (26). Zur Verlängerung der Bohrung (26) befindet sich am Sonnenträger (25) ein z.B. angeformter Lagerstützring (27). An der inneren Stirnseite des Lagerstützrings (27) ist ein ortsfestes außenverzahntes Sonnenrad (30), z.B. unter Zwischenschaltung eines eingemessenen Distanzringes (28), beispielsweise durch Verschrauben mittels der Schrauben (32) angeordnet. Die zwischen dem Lagerstützring (27) und dem Sonnenrad (30) gelegene Montagefuge weist eine Zentrierung auf.

Zwischen dem Boden (29) des Sonnenträgers (25), dem Kombilager (21) des Statorträgers (11) und der Hohlwelle (140) befindet sich ein zusammenhängender Hohlraum (7). In Letzterem ist ein auf der Hohlwelle (140) gelagerter Umlaufsteg (50) angeordnet.

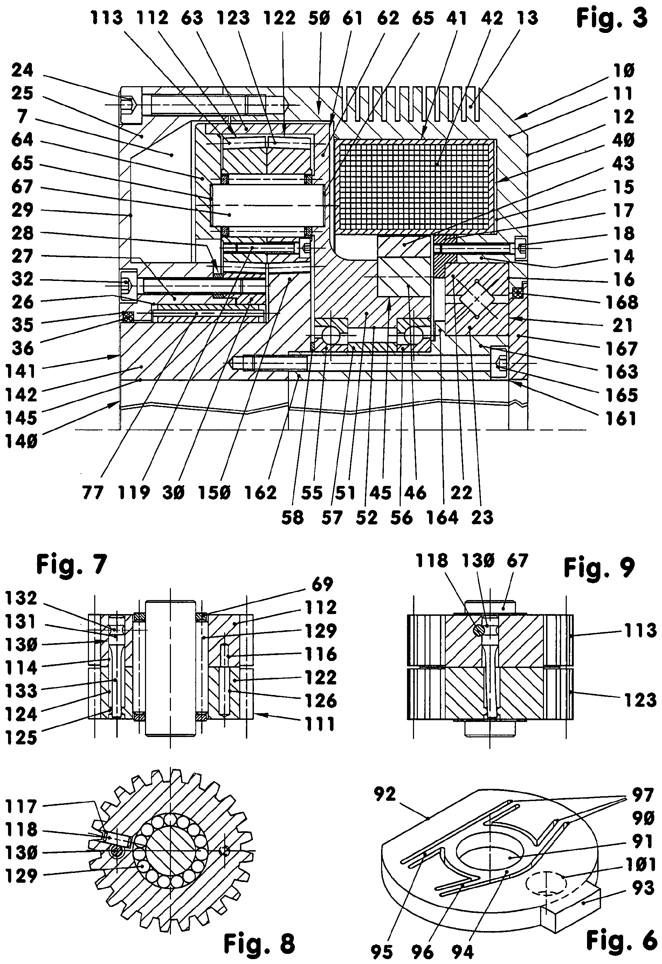

Der Umlaufsteg (50) besteht im Ausführungsbeispiel nach Figur 3 aus einer Nabe (51), einem Nabenflansch (61) und einem Deckel (64). Die Nabe (51) hat eine gestufte Bohrung (52) mit zwei von den Nabenstirnseiten aus eingearbeiteten Einsenkungen. In jeder Einsenkung sitzt als Wälzlager ein Schrägkugellager (55, 56), ein Kegelrollenlager oder dergleichen. Die vorgespannten Wälzlager (55, 56) lagern die Nabe (51) in O-Anordnung auf der Hohlwelle (140).

Auf der Nabe (51) sitzt im Bereich des rechten Wälzlagers (56) der Rotor (45) des Motors (40). Er ist in einer einseitig offenen Nut der Nabe (41) verschraubt. Der Rotor (45) hat einen Permanentmagnetring (46), der gegenüber dem statoreigenen Blechpaket (43) angeordnet ist.

An die Nabe (51) schließt sich linksseitig der Nabenflansch (61) an, vgl. Figur 3. Letzterer besteht aus dem Nabenteller (62) und dem Nabenaußenring (63). An der Stirnfläche des Nabenaußenrings (63) ist zentriert der Deckel (64) befestigt. Der Nabenflansch (61) und der Deckel (64) bilden einen mehrere Planeten (110, 111), vgl. Figur 2, lagernden Käfig.

Ggf. wird auf dem Deckel (64) der bewegliche Teil eines Winkelmesssystems oder eines Tachogenerators angeordnet. Das ortsfeste Teil des oder der Messsysteme ist dann z.B. am Sonnenträger (25) gelagert, vgl. Figur 1.

Die einzelnen, z.B. zweiteiligen jeweils aus den Teilplaneten (112, 122) bestehenden Planeten (110, 111) sitzen nadelgelagert auf z.B. zylindrischen Lagerbolzen (67, 68), die beidseits in entsprechenden Sacklochbohrungen (65) des Nabentellers (62) und des Deckels (64) aufgenommen sind. Die Lagerbolzen (67) sind in die Sacklochbohrungen (65) eingepresst oder in sonstiger Weise gegen ein Rotieren um ihre eigene Mittellinie (71, 72) gesichert. Ggf. werden die Sacklochbohrungen (65) zur Erhöhung der Fertigungsgenauigkeit durch Durchgangsbohrungen ersetzt, in denen dann zur axialen Positionierung der Lagerbolzen (67) jeweils außen entsprechende Deckel oder Sicherungsringe angeordnet werden.

Die Teilplaneten (112, 122) jeweils eines Planeten (110, 111) sind hier z.B. über Senkschrauben (119) oder Passschrauben starr miteinander verschraubt. Der nach Figur 3 linke Teilplanet (112) kämmt mit dem ortsfesten Sonnenrad (30). Beide Teilplaneten (112, 122) haben im Ausführungsbeispiel - zur Verzahnungsspielminimierung - eine kegelige Verzahnung (113, 123), deren Teilkegelwinkel zwischen 0,5 und 2 Winkelgraden liegt. Gemäß Figur 3 liegt die Spitze des Teilkegelwinkels des rechten Teilplaneten (122) rechts neben dem Lagerbolzen (67, 68) auf dessen Mittellinie, während die Spitze des Teilkegelwinkels des linken Teilplaneten (112) links neben dem Lagerbolzen (67, 68) auf dessen Mittellinie positioniert ist.

Das ortsfeste Sonnenrad (30) hat den gleichen Kegelwinkel wie der linke Teilplanet (112). Die Spitze des Teilkegelwinkels dieses Sonnenrads (30) befindet sich links neben der Hohlwelle (140) auf der Hauptmittellinie (9).

Die z.B. zweiteilige Hohlwelle (140) umfasst eine Sonnenwelle (141) und eine Stegstützwelle (161). Die Sonnenwelle (141) besteht aus einer Rohrwelle (142) und dem daran angeordneten abtriebsseitigen Sonnenrad (150). Letzteres kämmt mit dem rechten Teilplaneten (122) und ist ebenfalls kegelig verzahnt. Der Teilkegelwinkel des abtriebsseitigen Sonnenrads (150) entspricht dem des Teilplaneten (122). Die Spitze dieses sonnenradseitigen Teilkegelwinkels liegt links neben der Hohlwelle (140) auf deren Mittellinie.

Radial zwischen der außen feinbearbeiteten Rohrwelle (142) und dem nadellagerseitig ebenfalls feinbearbeiteten Lagerstützring (27) des Sonnenträgers (25) ist ein Nadellager (77) mit z.B. minimaler Lagerluft angeordnet. Das Nadellager (77) bildet die als Loslager wirkende Radiallagerung der Hohlwelle (140) im Gehäuse (10).

Durch die gewählte Anordnung der Kegelradverzahnungen der Teilplaneten (112, 122) und Sonnenräder (30, 150) zentrieren sich im Betrieb die Teilplaneten (112, 122) zwischen den beiden Sonnenrädern (30, 150). Um die Zentrierbewegung bei beispielsweise geradverzahnten Planeten zu ermöglichen, sitzen die Teilplaneten (112, 122) mit axialem Spiel auf den Lagerbolzen (67). Über die Breite des Distanzrings (28) wird der Abstand der Sonnenräder (30, 150) so eingestellt, dass die Teilplaneten (112, 122) paarweise spielfrei oder zumindest nahezu spielfrei mit den Sonnenrädern (30, 150) kämmen.

Die Stützstegwelle (161) sitzt, gehalten durch mehrere Schrauben (165), zentriert an der Sonnenwelle (141). Ihre radiale äußere Gestalt hat einen an die Sonnenwelle (141) anschließenden ersten zylindrischen und feinbearbeiteten Abschnitt (162), auf dem die den Umlaufsteg (50) lagernden Wälzlager (55, 56) angeordnet sind. Ein zweiter zylindrischer feinbearbeiteter Abschnitt (163) ist am freien Ende der Stegstützwelle (161) angeordnet. Auf diesem Abschnitt (163) ist der Innenring (23) des Kombilagers (21) gelagert. Zwischen den Abschnitten (162) und (163) befindet sich ein flanschartiger Anschlagsteg (164), an dem sich rechtsseitig der Innenring (23) des Kombilagers (21) und linksseitig das rechte Wälzlager (56) abstützt.

Die Innenringe der Wälzlager (55, 56) sitzen eingespannt zwischen dem Sonnenrad (150) und dem Anschlagsteg (164). Zwischen den Innenringen ist dazu eine Abstandshülse (57) eingebaut. Zudem ist zwischen dem Innenring des linken Wälzlagers (55) und dem Sonnenrad (150) eine Distanzscheibe (58) eingeklemmt.

An der äußeren Stirnseite der Stützstegwelle (161) ist eine Anschlagscheibe (167), z.B. mittels Passschrauben, fest verschraubt und zentriert angeordnet. Die Anschlagscheibe (167) fixiert den Innenring (23) des Kombilagers (21) in axialer Richtung. Zum anderen trägt sie auf ihrer radialen Außenwandung einen O-Ring (168) zum Abdichten des Hohlraums (7) gegenüber der Umgebung. Der O-Ring (168) gleitet entlang des äußeren Bereichs der Stufenbohrung (15) des Statorträgers (11). Zwischen dem Statorträger (11) und der Anschlagscheibe (167) ist er in einer labyrinthartigen Fuge angeordnet.

Auf der anderen Seite des Antriebs ist zur Abdichtung des Hohlraums (7) gegenüber der Umgebung ebenfalls ein O-Ring (36) positioniert. Er liegt in einer Ringnut (35) des Sonnenträgers (25), die der zylindrischen Außenfläche der Rohrwelle (142) gegenüberliegt.

Anstelle der O-Ringe (35, 168) können auch Quadringe oder Doppellippendichtungen verwendet werden. Sollte der Antrieb in einer staubigen oder spritzwasserhaltigen Umgebung eingesetzt werden, so kann das Gehäuse (10) auch einen Sperrluftanschluss erhalten, über den dann der Hohlraum (7) unter einen Überdruck von z.B. 0,2 bis $0,6*10^5$ Pa gesetzt wird. Zusätzlich kann der Sperrluftanschluss auch dazu benutzt werden, die Abwärme des Motors z.B. über Ventile, die an geeigneter Stelle angeordnet sind, abzuführen. Der Hohlraum (7) kann auch anstelle von Sperrluft von einem technischen Öl durchströmt werden, das neben der Schmierung des Getriebes auch das Abführen der Motorabwärme übernimmt.

Die Wälzlager (21, 55, 56) verfügen über eine Lebensdauerschmierung, während die Zahnräder (110, 111, 30, 150) im Ausführungsbeispiel mit einem Getriebefett geschmiert sind. Diese gilt auch für die Nadellager (77, 129). Ggf. ist zwischen der zentralen Bohrung des Deckels (64) und dem Lagerstützring (27) eine schleifende Dichtung oder eine Labyrinthdichtung angeordnet.

Bei einem Bestromen der ortsfesten Statorwicklung (42) dreht sich der Umlaufsteg (50) über die Wälzlager (55, 56) um die Hohlwelle (140). Der rotierende Umlaufsteg (50) rollt die Teilplaneten (112, 122) auf dem ortsfesten, ersten Sonnenrad (30) ab. Dabei treiben die Teilplaneten (112, 122) das zweite Sonnenrad (150) an, das wiederum die Hohlwelle (140) rotieren lässt.

Hat das erste Sonnenrad (30) z.B. 121 Zähne und das zweite Sonnenrad (150) zwei Zähne weniger, beträgt die Getriebeuntersetzung 1:59,5. Dreht sich beispielsweise in Figur 2 der Umlaufsteg (50) im Uhrzeigerdrehsinn und hat der untere Teilplanet (2) des Planeten (110) keinen Versatzwinkel, so hat der untere Teilplanet (3) des nächsten Planeten (111) einen Versatz von $\delta = 1/3$, während der untere Teilplanet (4) des wiederum nächsten Planeten (111) einen Versatz von $\delta = 2/3$ aufweist.

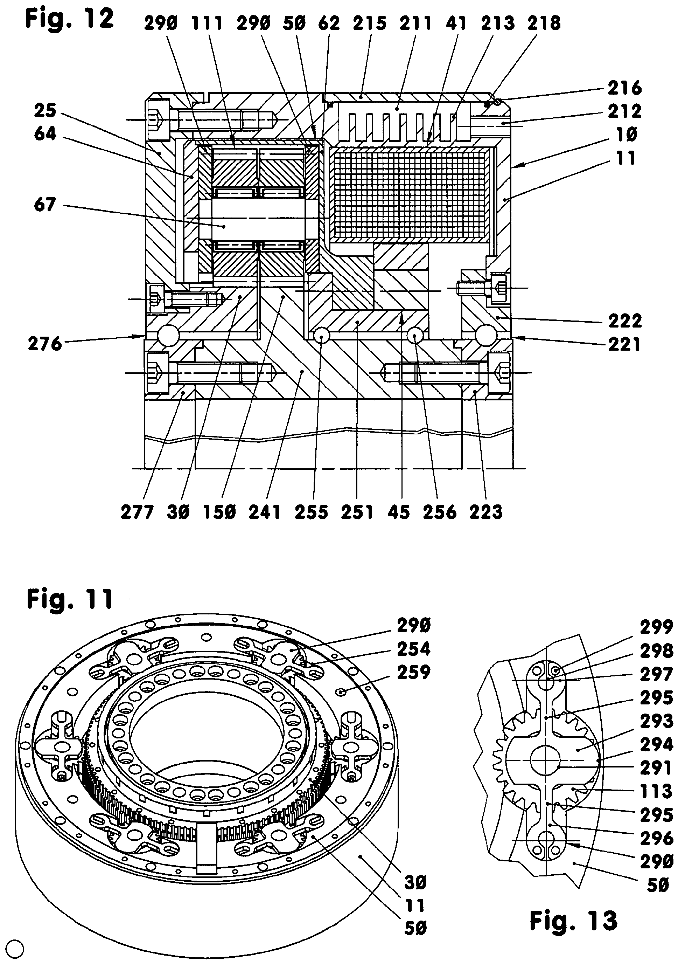

In den Figuren 11 und 12 ist eine kompakt bauende Variante des Antriebs der Figuren 1 bis 3 dargestellt. Durch den Einbau von Sonderwälzlagern (221; 276; 241, 251) verringert sich die Breite des Antriebs um 18,3 mm. Dazu werden die Sonnenwelle (141) und die Stützstegwelle (161) in einer Kombiwelle (241) zusammengeführt. In die Kombiwelle (241) ist zum einen das Sonnenrad (150) integriert und zum anderen bildet sie den Innenring der bisherigen Wälzlager (55, 56). Die Nabe (51) des Umlaufstegs (50) ist hier auf einem flanschartigen Außenring (251) befestigt, der über die Wälzkörper (255, 256) auf der Kombiwelle (241) gelagert ist. Auf dem Außenring (251) sitzt ferner der Rotor (45), wobei der Rotor (45) und der Umlaufsteg (50) beispielsweise mit dem Außenring (251) verschraubt sind.

Beidseits der Kombiwelle (241) sind die Sonderlager (221, 276) angeordnet. Dazu ist jeweils der Innenring (223) und (277) der Sonderlager mit der Kombiwelle (241) verschraubt. Die Innenringe (223, 277) liegen zentriert an den jeweiligen Stirnflächen der Kombiwelle (241) an. Der rechte Innenring (223) lagert z.B. über Wälzlagerkugeln den flanschartigen Außenring (222), an dem der Statorträger (11) angeflanscht ist. Auf dem linken Innenring (277) stützt sich, z.B. ebenfalls über Wälzlagerkugeln, das mit dem Sonnenträger (25) verschraubte Sonnenrad (30) ab. Das bisherige Kombilager (21) und das bisherige Nadellager (77) werden somit durch die Sonderlager (221) und (276) ersetzt.

Diese Antriebsvariante verfügt nach Figur 12 beispielsweise über eine separate Flüssigkeitskühlung zur Abfuhr der Motorabwärme. Dazu ist in der Außenwandung des Statorträgers (11) eine umlaufende Ausnehmung (211) eingearbeitet. In der Ausnehmung (211) sind mehrere umlaufende, radial abstehende Kühlrippen (213) angeordnet. Die Ausnehmung (221) ist mit einem Rohrdeckel (215) verschlossen, der in axialer Richtung auf den Statorträger (11) aufschiebbar ist. Zur axialen Sicherung weist der Statorträger (11) gemäß Figur 12 in der Nähe der rechten Stirnseite des Antriebs eine umlaufende Nut auf, in der ein Sicherungsring (216) neben dem rechten Stirnrand des Rohrdeckels (215) form- und kraftschlüssig sitzt. In der Montagefuge zwischen dem Rohrdeckel (215) und dem Statorgehäuse (11) sind zwei Dichtringe (218) angeordnet.

In der rechten Stirnseite des Antriebs befindet sich je ein Zu- und ein Ablauf (212) für das Kühlmittel.

Soll das Kühlmittel, z.B. Kühlwasser, kanalisiert im Statorträger (11) geführt werden, können die Kühlrippen (213) durch eine sich in der Ausnehmung (221) schraubenförmig windende Kühlrippe ersetzt werden. In diesem Fall reichen die einzelnen Windungen der Kühlrippe an den Rohrdeckel (215) heran, so dass sie dort mit oder ohne Spiel anliegen. Der hier nicht dargestellte Kühlmittelablauf befindet sich beispielsweise in der Stirnseite des Sonnenträgers (25). Der Ablaufanschluss ist dabei über eine den Statorträger (11) durchquerende Bohrung mit der Ausnehmung (211) verbunden.

Die Figur 11 zeigt die schmälere Variante - ohne Wasserkühlung - in einer perspektivischen Ansicht bei abmontiertem Sonnenträger (25). Zwischen dem Statorträger (11) und dem Sonnenrad (30) ist der Umlaufsteg (50) mit seinem sechs Planetenaussparungen (54) zu erkennen. Die Planetenaussparungen haben in Umfangsrichtung beidseitig langlochartige Ausnehmungen (254), die sich über die gesamte Tiefe der Planetenaussparungen (54) erstrecken. In den halbzylindrischen Endbereichen der Ausnehmungen (254) sitzen spielfrei die Lagerbolzenträger (290). Letztere lagern die Planeten (110, 111) beidseitig über deren Lagerbolzen (67), vgl. Figur 11. Der untere Lagerbolzenträger (290) liegt am Nabenteller (62) an, während der obere Lagerbolzenträger (290), nach Figur 11, an dem mit dem Umlaufsteg (50) verschraubten Deckel (64) anliegt.

Der einzelne Lagerbolzenträger (290) besteht aus einer Zentralplatte (293), die an jeder Seite einen gabelartigen Haltearm (295 - 298) aufweist. Letzterer besteht aus einer z.B. vierkantstabförmigen Blattfeder (295), die an ihrem äußeren Ende eine Haltegabel (296) trägt. Zwischen den beiden Gabelzinken (297) der Haltegabel (296) befindet sich eine Aussparung (298).

Nach Figur 13 sind die um die Aussparung (298) der Haltegabel (296) angeordneten Gabelzinken (297) bogenförmig gekrümmt. Zudem weisen sie im Bereich ihrer freien Enden jeweils eine Bohrung (299) auf. Die Bohrungen (299) dienen beim Einbau der Lagerbolzenträger (290) in den Umlaufsteg (50) als Angriffsstellen für eine Seegeringzange.

Zwischen den Blattfedern (295) weist die Zentralplatte (293) einen Durchgangsbohrung (291) auf, in der die Lagerbolzen (67) jeweils, z.B. über ein Querpresssitz, fixiert sind. Die Zentralplatte (293) weist quer zu den Blattfedern (295) jeweils einen bogenförmige Stirnfläche auf, deren Mittellinien parallel zur Mittellinie der Durchgangsbohrung (291) orientiert sind. Die Stirnfläche, die radial nach außen weist, dient als radialer Anschlag (294) des Lagerbolzenträgers (290). Der Anschlag (294) begrenzt den Federweg der Blattfedern (295).

Der z.B. aus einem Federstahl gefertigte Lagerbolzenträger (290) sitzt spielfrei in den einander gegenüberliegenden Ausnehmungen (254) der Planetenradaussparung (54). Seine Gabelzinken (297) liegen unter großer Spannkraft, die quer zu den Blattfedern (295) ausgerichtet ist, an der Wandung der Ausnehmungen (254) an.

Die Anordnung der Blattfedern (295) gewährleistet eine elastische Nachgiebigkeit des Lagerbolzens (67, 68) in Richtung der Fliehkraftwirkung der Planeten (110, 111). Die Anordnung der Blattfederstege (95, 96) gewährleistet eine elastische Nachgiebigkeit des Lagerbolzens (67, 68) in Richtung der Fliehkraftwirkung der Planeten (110, 111). Bezüglich des Achsabstandes und der Minimierung des Verzahnungsspiels wird auf die Ausführungen zur Variante nach den Figuren 2 und 6 verwiesen.

Die Figur 3 zeigt einen Antrieb, bei dem zum Minimieren des Verzahnungsspiels die Teilplaneten (112, 122) und die außenverzahnten Sonnenräder (30, 150) aneinander angepasste Kegelverzahnungen aufweisen. Zudem wird der axiale Abstand der Sonnenräder (30, 150) bei jedem Getriebe speziell gemessen, um diesen mit mindestens einem eingepassten Distanzring (28) genau einzustellen.

In den Figuren 2 und 6 werden Antriebsteile gezeigt, bei denen das Verzahnungsspiel durch radial federnde Aufhängungen der Planeten (110, 111) minimal gehalten wird.

Die Figuren 7 bis 9 stellen Antriebsteile dar, mit denen das Verzahnungsspiel mit Hilfe von geteilten Planeten (110, 111) verringert wird. Hier werden Planeten in Teilplaneten (112, 122) aufgeteilt, wobei die paarweise auf einem Lagerbolzen gelagerten Teilplaneten (112, 122) mittels eines Federsystems gegeneinander verspannt werden. Die entsprechende Feder bzw. das entsprechende Federsystem sorgt für eine gegenseitige Verdrehung um die Rotationsachsen (71, 72) der Teilplaneten.

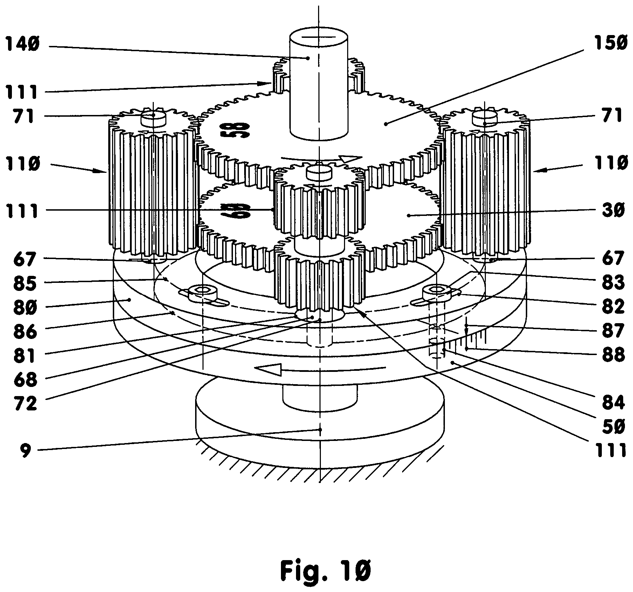

In der Figur 10 wird ein Getriebeschema für einen Antrieb gezeigt, bei dem zur Verzahnungsspielminimierung der Umlaufsteg (50) durch das separate Lagern eines Schwenkringes (80) geteilt ist. Hier trägt der Umlaufsteg (50) und der Schwenkring (80) jeweils einen Teil der Planeten (110, 111). Die Planeten (111) des Schwenkrings (80) werden manuell, motorisch, hydraulisch oder pneumatisch gegen die Planeten (110) des Umlaufstegs (50) verspannt.

Bei den aus den Figuren 2, 6, 7 bis 9 und 10 bekannten Antriebsvarianten sind die Zahnräder (110, 111) bzw. (112, 122) sowie (30) und (150) vorzugsweise geradverzahnte Stirnräder, also keine Kegelräder, wie aus Figur 3 bekannt ist.

Die Figur 6 zeigt einen oberen Lagerbolzenträger (90), über den z.B. geradverzahnte Stirnradplaneten in einer weiteren Variante, vgl. auch Figur 2, elastisch im Umlaufsteg (50) auf ihren Lagerbolzen (67, 68) gelagert werden. Die oberen Lagerbolzenträger (90) sind hier scheibenförmige Körper, die jeweils einseitig eine Sacklochbohrung (91) aufweisen, in der die Lagerbolzen (67, 68) z.B. eingepresst sitzen. Der im Wesentlichen kreisrunde obere Lagerbolzenträger (90) weist am Umfang eine Positioniernase (93) und eine dieser gegenüberliegende, zu den Stirnflächen des Lagerbolzenträgers (90) senkrechte Abflachung (92) auf. Die Flächennormale dieser Abflachung zeigt in Richtung Hauptmittellinie (9). Mit der zylindrischen Außenwandung ist der Lagerbolzenträger (90) im Umlaufsteg (50) zum einen im Bereich des Nabentellers (62) und zum anderen im Deckel (64) oder - wie in Figur 2 - im nabentellerfernen Bereich der Planetenaussparung (54) spielfrei oder nahezu spielfrei eingesetzt. Die in entsprechenden Trägernuten (59) des Umlaufsteges (50) sich abstützenden Positioniernasen (93) verhindern ein sich Drehen des oberen Lagerbolzenträgers (90) um die jeweilige Mittellinie (71, 72) des entsprechenden Planeten (110, 111).

Der untere Lagerbolzenträger, der - in der Konstruktion nach Figur 2 - im Umlaufsteg (50) auf dem planen Boden der Planetenaussparung (54) aufliegt, weist anstelle der Positioniernase (93) eine Durchgangsbohrung (101) auf, die in Figur 6 gestrichelt dargestellt ist. Nach Figur 6 liegt die Durchgangsbohrung (101) zwischen der hier nicht benötigten Positioniernase (93) und der Sacklochbohrung (91). Im planen Boden der Planetenaussparung (54) befindet sich eine zur Durchgangsbohrung (101) des korrekt positionierten unteren Lagerbolzenträgers fluchtende, hier nicht dargestellte Bohrung. In dieser Bohrung und der Durchgangsbohrung (101) ist ein Bolzen oder Passbolzen eingepresst, der den unteren Lagerbolzenträger verdrehsicher fixiert.

Nach Figur 2 wird als axiale Fixierung des oberen Lagerbolzenträgers (90) z.B. je zwei Schraubenköpfe (105) verwendet. Die zu den Köpfen (105) gehörenden Schrauben sitzen so nahe an der jeweiligen Planetenaussparung (54), dass ihre Köpfe den jeweiligen Lagerbolzenträger (90) teilweise überdecken.

Innerhalb des Lagerbolzenträgers (90) befindet sich um die Sacklochbohrung (91) herum eine z.B. zylindrische Zentralscheibe (94), die über z.B. vier Blattfederstege (95, 96) am Lagerbolzenträger (90) z.B. angeformt ist. Die vier Blattfederstege (95, 96) werden hier durch das Erodieren dreier Erodierkanäle (97) herausgearbeitet. Die beiden in der Nähe der Abflachung (92) angeordneten Stege (95) verlaufen parallel zur Abflachung (92). Die beiden anderen Blattfederstege (96) schließen zueinander einen Winkel von z.B. 160 Winkelgraden ein, wobei deren Winkelhalbierende - bei montiertem Lagerbolzenträger (90) - die Hauptmittellinie (9) schneidet.

Die Anordnung der Blattfederstege (95, 96) gewährleistet eine elastische Nachgiebigkeit des Lagerbolzens (67, 68) in Richtung der Fliehkraftwirkung der Planeten (110, 111). Werden nun die Lagerbolzenträger (90) so eingebaut, dass der reale Achsabstand zwischen der Hauptmittellinie (9) und der jeweiligen Planetenmittellinie (71, 72) - je nach Verzahnungsqualität - z.B. 10 bis 100 μm kleiner ist, als der theoretisch aufgrund der Verzahnung erforderliche Achsabstand, so liegen die Planeten (110, 111) axial und elastisch federnd vorgespannt an den Sonnenrädern (30, 150) an. Das ermöglicht einen spiel- und/oder umkehrspannenfreien Antrieb.

Ggf. ist z.B. in der Abflachung (92) und/oder in der radial außen liegenden Planfläche der Positioniernase (93) eine Gewindebohrung eingelassen. Die Mittellinien der Gewindebohrungen schneiden die Mittellinie der Sacklochbohrung (91) senkrecht. In der oder den Gewindebohrungen ist jeweils ein Gewindestift verdrehfest so tief eingeschraubt, dass der Hub der Zentralscheibe (94) durch Anschlagen an den Enden der Gewindestifte begrenzbar ist.

Figuren 7 bis 9 zeigen eine weitere Alternative für einen spiel- und/oder umkehrspannenfreien Antrieb für ein aus Stirnrädern (110, 111; 30, 150) gebautes Umlaufgetriebe. Dazu werden im Ausführungsbeispiel nach Figur 7 zweiteilige geradverzahnte Planeten (110, 111) verwendet. Wie in Figur 3 sind die Planeten (110, 111) zur Ausbildung der Teilplaneten (112) und (122) mittig quer zur Mittellinie (71, 72) geteilt. Beide Teilplaneten (112, 122) haben die gleiche Zähnezahl. Zwischen beiden Teilplaneten (112, 122) eines Planeten (110, 111) sind ein bis sechs Kombifedern (130) eingebaut, die die Teilplaneten (112, 122) gegeneinander federnd verdrehen.

Die Kombifedern (130) sind rotationssymmetrische Stäbe, die beispielsweise aus einem Federstahl hergestellt sind. Nach Figur 7 sitzt im oberen Planetenteil (112) die einzelne Kombifeder (130) über ihren Sitzabschnitt (131) in einer Längsbohrung (114) des oberen Teilplaneten (112). Der Sitzabschnitt (131) hat die Form eines Zylinders, in dessen Mantelmitte z.B. eine Nut (132) mit dem Einzelquerschnitt in Form eines Kreisabschnitts eingearbeitet ist. Der Außendurchmesser des Sitzabschnitts (131) entspricht dem Innendurchmesser der Längsbohrung (114). Ggf. sitzt dort die Kombifeder (130) auch mittels eines Querpresssitzes.

An den Sitzabschnitt (131) schließt sich ein im Durchmesser dünnerer, im Wesentlichen ebenfalls zylindrischer Biegeabschnitt (133) an. Der Übergangsbereich vom Sitzabschnitt (131) zum Biegeabschnitt (133) ist so ausgerundet, dass die mittellinienparallelen Mantellinien des Biegeabschnittes (133) tangential in den Kerbradius übergehen.

Um die Kombifeder (130) in der Lagerbohrung gegen axialen Versatz formschlüssig zu sichern, vgl. Figur 8, weist der obere Teilplanet (112) im Bereich einer Zahnlücke eine Querbohrung (117) auf, in der ein Stift (118) z.B. eingepresst und/ober eingeklebt ist. Der Stift (118) liegt in der Nut (132) des Sitzabschnitts (131) an.

In unteren Endbereich der Längsbohrung (124) des unteren Teilplaneten (122) hat diese einen nach innen ragenden Anlagesteg (125), an dem das untere Ende der Kombifeder (130) mit geringem Spiel anliegt.

In Figur 9 ist der zweiteilige geradverzahnte Planet (111) in einem Schnitt gezeigt, der die Schnittfläche - vor dem Lagerbolzen (67) - in Höhe der Längsbohrung (114, 124) darstellt. Der obere Teilplanet (112) ist gegenüber dem unteren (122) um z.B. eine viertel Zahnteilung bezüglich der Flucht der Bohrungen (114, 124) versetzt gezeichnet. Die auf Biegung und Torsion beanspruchte Kombifeder (130) ist bei deckungsgleichen Verzahnungen (113, 123) der beiden Teilplaneten (112, 122) maximal verspannt. Federt die Kombifeder (130) in ihre unverformte Ausgangslage zurück, so ist die untere Verzahnung (123) gegenüber der oberen (113) um z.B. eine viertel Zahnteilung verdreht.

Wird eine ungeradzahlige Anzahl an Kombifedern (130) verwendet, vgl. Figur 7, liegt jeder Kombifeder (130) in den Teilplaneten (112, 122) eine Massenausgleichsbohrung (116, 126) gegenüber, um die Unwucht zu minimieren.

Anstelle der Kombifeder (130) kann auch eine Gummifeder bzw. eine Verdrängerfeder benutzt werden. In diesem Fall wird die Kombifeder (130) durch einen im Teilplaneten (112) befestigten Bolzen ersetzt. Letzterer ragt in eine Bohrung des unteren Teilplaneten (122) hinein, wobei der Bohrungsdurchmesser größer ist als der Außendurchmesser des Bolzens. In der Bohrung ist der Bolzen von einem rohrförmigen Gummielement umgeben, das den gesamten Raum zwischen dem Bolzen und der Bohrung ausfüllt. Ggf. ist der Bolzen und/oder die Bohrung mit dem Gummielement stoffschlüssig durch Kleben oder Vulkanisieren verbunden. Sobald die Teilplaneten (112, 122) - für den Einbau ins Getriebe - gegeneinander verdreht werden, wird das Gummielement einseitig unter Ausbildung einer Federwirkung elastisch verdichtet.

Die Figur 10 zeigt das Schema eines Umlaufgetriebes, bei dem - im Gegensatz zu der Ausführung nach Figur 5 - zwei Planeten (111) über ihre Lagerbolzen (67) auf einem Schwenkring (80) gelagert sind. Der Schwenkring (80) sitzt um die Hauptmittellinie (9) um einige Winkelgrade schwenkbar auf dem Umlaufsteg (50). Die Mittellinien (71) der Planeten (111) verlaufen auch hier parallel zur Hauptmittellinie (9) und liegen zudem mit dieser in einer Ebene. Der Abstand der Mittellinien (71) der auf dem Schwenkring (80) über die Lagerbolzen (67) gelagerten Planeten (111) zu der Hauptmittellinie (9), entspricht dem Abstand, den auch die Mittellinien (72) der direkt auf dem Umlaufsteg (50) gelagerten Planeten (110) zu der Hauptmittellinie (9) haben.

Um die Schwenkbarkeit des Schwenkrings (80) gegenüber der Umlaufscheibe (50) zu ermöglichen, weist der Schwenkring (80) zum einen um die an der Umlaufscheibe (50) direkt befestigten Lagerbolzen (68) der Planeten (111) herum eine größere Bohrung (81) auf. Zum anderen hat der Schwenkring (80) im Ausführungsbeispiel mehrere Langlöcher (82), deren Längserstreckung z.B. entlang eines Kreises (85) verläuft, den die Mittellinien (71, 72) der Planeten (110, 111) senkrecht schneiden. Hier ist zwischen je zwei Planeten (110, 111) ein solches Langloch (82) angeordnet.

Der Umlaufsteg (50) weist vier Gewindebohrungen (84) auf, die unterhalb der Langlöcher (82) des Schwenkringes (80) und zudem auf einem Kreis (86) um die Hauptmittellinie (9) liegen, dessen Durchmesser dem Durchmesser des Kreises (85) entspricht. Durch jedes Langloch (82) ist eine Schraube (83) hindurchgesteckt, über die der Schwenkring (80) am Umlaufsteg (50) befestigt wird. Der Schwenkring (80) ist gegenüber dem Umlaufsteg (50) so zentriert, dass bei einem Schwenken des Schwenkringes (80) gegenüber der Umlaufscheibe (50) die Kreise (85) und (86) deckungsgleich bleiben.

Zum Verringern des zwischen den Sonnenrädern (30, 150) und den Planeten (110, 111) vorhandenen Verzahnungsspiels wird der Schwenkring (80) in eine Drehrichtung um einige Winkelsekunden verschwenkt, so dass der am Zylindermantel des Schwenkrings (80) angebrachte Markierungspfeil (87) gegenüber der hier nur symbolhaften Strichmarkierung (88) des Umlaufsteges (50) geringfügig wandert.

Schließen die von den Mittellinien (71, 9) aufgespannte Ebene und die Ebene, in der die Mittellinien (72, 9) liegen einen Winkel von genau 90 Winkelgraden ein, haben die Verzahnungen genau das Spiel, das durch die gewählte Qualität der Verzahnung vorgegeben ist, vgl. DIN 3962.

Um bei mittlerer Qualität ein durchschnittliches Flankenspiel im einstelligen Mikrometerbereich zu reduzieren, reicht der Bruchteil einer Winkelminute, um den der Schwenkring (80) gegenüber dem Umlaufsteg (50) verschwenkt werden muss.

Unter Vernachlässigung einer sich gegebenenfalls einstellenden Unwucht wird eine Spielverringerung schon dadurch erzielt, dass nur ein Planet über seinen Lagerbolzen mit dem Schwenkring (80) verschwenkt wird.

Bezugszeichenliste:

| | |
|---|---|
| 1 | Achse |
| 2, 3, 4 | Teilplaneten von (110, 111) |
| 5 | Untergrund |
| 7 | Hohlraum |
| 9 | Getriebemittellinie, Hauptmittellinie |
| 10 | Gehäuse |
| 11 | Statorträger, Gehäuseteil |
| 12 | Außenbereich |
| 13 | Kühlrippen |
| 14 | Gehäusering |
| 15 | Stufenbohrung |
| 16 | Gehäusebund |
| 17 | Klemmring |
| 18 | Schrauben für (17) |
| 21 | Kreuzrollenlager, Kombilager |
| 22 | Außenring |
| 23 | Innenring |
| 24 | Schraube für (11, 25) |
| 25 | Sonnenträger, Gehäuseteil |
| 26 | Bohrung, zentral |
| 27 | Lagerstützring |
| 28 | Einstellring, Distanzring |
| 29 | Boden |
| 30 | Sonnenrad, erstes; ortsfest, feststehend |
| 32 | Schraube für (25, 30) |
| 35 | Ringnut |
| 36 | O-Ring |
| 40 | Motor, Torquemotor, Elektromotor |
| 41 | Stator |
| 42 | Wicklung, Statorwicklung |
| 43 | Blechpaket |
| 45 | Rotor |
| 46 | Permanentmagnetring |
| 50 | Umlaufsteg |
| 51 | Nabe |
| 52 | Stufenbohrung, zentrale Bohrung |
| 54 | Planetenaussparungen |
| 55, 56 | Wälzlager, Rillenkugellager |
| 57 | Abstandshülse |
| 58 | Distanzscheibe |
| 59 | Trägernuten |
| 61 | Nabenflansch |
| 62 | Nabenteller |
| 63 | Nabenaußenring |
| 64 | Deckel |
| 65 | Sacklochbohrungen |
| 67, 68 | Lagerbolzen |
| 69 | Anlaufscheiben |
| 71, 72 | Mittellinien zu (67, 68; 110, 111) Rotationsachsen |
| 73 | Pfeil für eine Drehrichtung von (50), Antrieb |
| 74 | Kreis, auf dem (71, 72) liegen |
| 77 | Nadeln, Nadellager |
| 80 | Schwenkring |
| 81 | Bohrung im Ring |
| 82 | Langlöcher |
| 83 | Schraube |
| 84 | Gewindebohrung |
| 85 | Kreis, Mittellinienkreis der Langlöcher |
| 86 | Kreis, Mittellinienkreis der Gewindebohrungen |
| 87 | Markierungspfeil |
| 88 | Strichmarkierung |
| 90 | Lagerbolzenträger |
| 91 | Sacklochbohrung |
| 92 | Abflachung |
| 93 | Positioniernase |
| 94 | Zentralscheibe |
| 95, 96 | Blattfederstege |
| 97 | Erodierkanäle |
| 101 | Durchgangsbohrung |
| 105 | Schraubenköpfe |
| 110, 111 | Planete |
| 112 | linker oder oberer Teilplanet |
| 113 | Verzahnung des oberen Teilplaneten, ggf. kegelig |
| 114 | Längsbohrung für Kombifeder |
| 116 | Massenausgleichsbohrung |
| 117 | Querbohrung |
| 118 | Stift |
| 119 | Senkschraube |
| 122 | rechter oder unterer Teilplanet |
| 123 | Verzahnung des unteren Teilplanets, ggf. kegelig |
| 124 | Längsbohrung |
| 125 | Anlagesteg |
| 126 | Massenausgleichbohrung |
| 127 | Zahn |
| 128 | Zahnlücke |
| 129 | Nadeln der Nadellagerungen von (110, 111) |
| 130 | Kombifedern |

| 131 | Sitzabschnitt |
| 132 | Nut, Kerbe |
| 133 | Biegeabschnitt |
| 140 | Hohlwelle, Antriebswelle, Abtrieb |
| 141 | Sonnenwelle |
| 142 | Rohrwelle, Abtriebswelle |
| 145 | Bohrung, zentral; Durchgangsbohrung |
| 150 | Sonnenrad, zweites; Abtriebsrad, Abtrieb |
| 161 | Stützstegwelle |
| 162 | erster Abschnitt |
| 163 | zweiter Abschnitt |
| 164 | Anschlagsteg, flanschartig |
| 165 | Schrauben |
| 167 | Anschlagscheibe |
| 168 | O-Ring |
| 170 | Anschluss für Motor und Tachogenerator |
| 171 | Anschluss für Wegmesssystem |
| 211 | Ausnehmung, umlaufend |
| 212 | Kühlmittelzulauf, Kühlmittelablauf |
| 213 | Kühlrippen |
| 215 | Rohrdeckel |
| 216 | Sicherungsring |
| 218 | Dichtringe |
| 221 | Sonderlager, rechts; Wälzlager |
| 222 | Außenring von (221) |
| 223 | Innenring von (221) |
| 241 | Kombiwelle |
| 251 | Außenring zu (255, 256) |
| 254 | Ausnehmungen, langlochartig |
| 255, 256 | Wälzkörper |
| 259 | Gewindebohrungen für Befestigung von (64) |
| 276 | Sonderlager, links; Wälzlager |
| 277 | Innenring von (276) |
| 290 | Lagerbolzenträger |
| 291 | Durchgangsbohrung |
| 293 | Zentralplatte |
| 294 | Anschlag |
| 295 | Blattfeder |
| 296 | Haltegabeln |
| 297 | Gabelzinken |
| 298 | Aussparung |
| 299 | Bohrungen |

**Patentansprüche**

1. Antrieb mit einem in einem Gehäuse (10) integrierten, ins Langsame übersetzenden Umlaufgetriebe,

   - wobei ein Antriebsmotor (40) auf einen mindestens zwei Planeten (110, 111) lagernden Umlaufsteg (50) wirkt, dessen einzelne Planeten (110, 111) zum einen an einem im Gehäuse (10) drehfest angeordneten außenverzahnten Sonnenrad (30) und zum anderen an einem abtreibenden außenverzahnten Sonnenrad (150) abrollen,
   - wobei das Subtrahieren der Zähnezahl des abtreibenden Sonnenrades (150) von der Zähnezahl des drehfest angeordneten Sonnenrades (30) eine geradzahlige natürliche Zahl als Differenzzähnezahl $z_{Diff}$ ergibt,
   - wobei alle Planeten die gleiche Zähnezahl aufweisen,
   - wobei mindestens ein Sonnenrad (30, 150) eine positive oder eine negative Profilverschiebung aufweist oder
   - wobei neben der oder den Profilverschiebungen der Sonnenräder (30, 150) der einzelne Planet (110, 111) für das jeweilige Kämmen mit dem einzelnen Sonnenrad (30, 150) eine separate Verzahnung (113, 123) hat und beide Verzahnungen (113, 123) - bei gleicher Zähnezahl
   - mindestens eine Verzahnung haben, die eine positive oder eine negative Profilverschiebung aufweist, **dadurch gekennzeichnet,**
   - **dass** die Gesamtzahl $p_{ges}$ der Planeten (110, 111) größer als die Differenzzähnezahl $z_{Diff}$ ist,
   - **dass** bei einer Teilanzahl $p_v$ der Gesamtzahl $p_{ges}$ der Planeten (110, 111) mit $p_v = p_{ges} - z_{Diff}$ die jeweiligen separaten Verzahnungen pro Planet (111) in Umlaufrichtung - hinter jedem Planet (110) ohne Verzahnungsverschwenkung - hintereinander jeweils - gegenüber dem vorderen - um einen Versatzwinkel $\delta$ verschwenkt sind,
   - **dass** sich der Versatzwinkel $\delta$ aus der Formel $\delta = \tau * (z_{Diff}/p_{ges}) * (z_{S1}/z_{Pl})$ ergibt, mit $\tau$ als Teilungswinkel des ersten Sonnenrades (30), $z_{S1}$ als Zähnezahl des drehfest angeordneten Sonnenrades (30) und als Zähnezahl der Planeten (110, 111) und
   - **dass** zum Minimieren des Verzahnungsspiels zwei zueinander benachbarte oder miteinander kämmende Zahnräder des Umlaufgetriebes - unabhängig von den regulären getriebetechnischen Bewegungsvorgängen - relativ zueinander verschiebbar angeordnet sind.

2. Antrieb nach Anspruch 1, **dadurch gekennzeichnet, dass** die Planeten (110, 111) im Umlaufsteg (50) radial mit einer Winkelabweichung von $\pm$ 15 Winkelgraden zur Hauptmittellinie (9) des Antriebs elastisch gelagert sind.

3. Antrieb nach Anspruch 1, **dadurch gekennzeichnet, dass** bei mindestens zwei in dem Umlaufsteg (50) gelagerten Planeten (110, 111) mindestens einer (111) der Planeten (110, 111) aus zwei Teilplaneten (112, 122) besteht und einer der Teilplaneten (112) gegen den anderen (122) um seine Mittellinie (71, 72) verdrehbar elastisch verspannt ist.

4. Antrieb nach Anspruch 1, **dadurch gekennzeichnet, dass** bei mindestens zwei in einem Umlaufsteg (50) gelagerten Planeten (110, 111) mindestens einer der Planeten in Umfangsrichtung auf einem Kreis mit dem regulären Achsabstand zu den Sonnenrädern (30, 150) um einige Winkelsekunden oder Winkelminuten verlagerbar ist.

5. Antrieb nach Anspruch 3, **dadurch gekennzeichnet, dass** mindestens zwei miteinander kämmende Zahnräder (112, 30; 122, 150), die jeweils parallele Mittellinien und eine kegelige Verzahnung haben, gegeneinander axial verschiebbar angeordnet sind.

6. Antrieb gemäß Anspruch 1, **dadurch gekennzeichnet, dass** die Übersetzung des Umlaufgetriebes sich errechnet aus einem Quotienten, dessen Dividend die Zähnezahl des abtreibenden Sonnenrades (150) ist, während dessen Divisor die Differenz aus der Zähnezahl des drehfest angeordneten Sonnenrades (30) und des zweiten, abtreibenden Sonnenrades (150) ist.

7. Antrieb nach Anspruch 1, **dadurch gekennzeichnet, dass** der einzelne Planet (110, 111) aus zwei koaxial angeordneten Teilplaneten (112, 122) besteht, die starr miteinander verbunden sind.

8. Antrieb gemäß Anspruch 1, **dadurch gekennzeichnet, dass** er die Wälzlager (21, 55, 56, 77) aufweist und diese eine Lagerluft der Lagerluftgruppe C2 nach DIN 620/T4 haben.

## Claims

1. A drive with an epicyclic gear integrated into a housing (10) and converting to low speed,

   - wherein a drive motor (40) acts on a circulating web (50) bearing at least two planets (110, 111), the individual planets (110, 111) whereof on the one hand roll off on an externally toothed sun gear (30) arranged rotationally fixed in the housing (10) and on the other hand roll off on a driving externally toothed sun gear (150),
   - wherein the subtraction of the tooth number of the driving sun gear (150) from the tooth number of the sun gear (30) arranged rotationally fixed produces an even natural number as a differential tooth number $z_{Diff}$,
   - wherein all the planets have the same number of teeth,

   - wherein at least one sun gear (30, 150) has a positive or a negative profile shift or
   - wherein, apart from the profile shift or shifts of the sun gears (30, 150), the individual planet (110, 111) has a separate toothing (113, 123) for the respective meshing with the individual sun gear (30, 150) and both toothings (113, 123) - with the same number of teeth - have at least one toothing which has a positive or a negative profile shift, **characterised in**
   - **that** the total number $p_{ges}$ of the planets (110, 111) is greater than the differential tooth number $z_{Diff}$,
   - **that**, in the case of a partial number $p_v$ of the total number $p_{ges}$ of the planets (110, 111) with $p_v = p_{ges} - Z_{Diff}$, the respective separate toothings per planet (111) in the direction of rotation
   - behind each planet (101) without tooth pivoting
   - one behind the other - are pivoted by an offset angle $\delta$ relative to the front one,
   - **that** the offset angle $\delta$ results from the formula $\delta = \tau * (z_{Diff}/p_{ges}) * (z_{s1}/z_{p1})$, with $\tau$ as the pitch angle of the first sun gear (30), $z_{s1}$ as is the tooth number of the sun gear (30) arranged rotationally fixed and $z_{p1}$ as the tooth number of the planets (110, 111) and
   - **that** to minimise the tooth play, two sun gears of the epicyclic gear adjacent to one another or meshing with one another - irrespective of the regular gear-related movement processes - are arranged displaceable relative to one other.

2. The drive according to claim 1, **characterised in that** the planets (110, 111) in the circulating web (50) are elastically mounted radially with an angular deviation of $\pm$ 15 degrees to the main centre-line (9) of the drive.

3. The drive according to claim 1, **characterised in that**, in the case of at least two planets (110, 111) mounted in the circulating web (50), at least one (111) of the planets (110, 111) consists of two partial planets (112, 122) and one of the partial planets (112) is elastically tensioned with respect to the other (122) so as to be rotatable about its centre-line (71, 72).

4. The drive according to claim 1, **characterised in that**, in the case of at least two planets (110, 111) mounted in a circumferential web (50), at least one of the planets can be displaced by several arcsecs or minutes of an arc in the direction of rotation on a circle with the regular axial distance to the sun gears (30, 150).

5. The drive according to claim 3, **characterised in that** at least two mutually meshing gearwheels (112, 30; 122, 150), which each have parallel centre-lines and a conical gearing, are arranged axially displaceable with respect to one another.

6. The annular drive according to claim 1, **characterised in that** the translation of the epicyclic drive is calculated from a quotient, the dividend of which is the number of teeth of the driving sun gear (150), whilst the divisor thereof is the difference from the number of teeth of the sun gear (30) arranged rotationally fixed and the second driving sun gear (150).

7. The drive according to claim 1, **characterised in that** the individual planet (110, 111) consists of two coaxially arranged partial planets (112, 122) which are rigidly connected to one another.

8. The drive according to claim 1, **characterised in that** it comprises the roller bearings (21, 55, 56, 77) and the latter have an internal clearance of internal clearance group C2 according to DIN 620/T4.

## Revendications

1. Système d'entraînement avec un train épicycloïdal démultiplié, intégré dans un boîtier (10),

   - sachant qu'un moteur d'entraînement (40) agit sur une moulure périphérique (50) logeant au moins deux planétaires (110, 111), dont les planétaires (110, 111) individuels roulent d'une part sur une roue solaire (30) à denture extérieure disposée solidaire en rotation dans un boîtier (10) et d'autre part sur une roue solaire (150) à denture extérieure entraînante,
   - sachant qu'en soustrayant le nombre de dents de la roue solaire (150) entraînante du nombre de dents de la roue solaire (30) disposée solidaire en rotation, on obtient un nombre naturel pair en tant que nombre de dents différentiel $Z_{Diff}$,
   - sachant que tous les planétaires comportent le même nombre de dents,
   - sachant qu'au moins une roue solaire (30, 150) comporte un déport de profil positif ou négatif, ou
   - sachant qu'en plus du ou des déport(s) de profil des roues solaires (30, 150), le planétaire individuel (110, 111) possède une denture séparée (113, 123) pour l'engrènement respectif avec la roue solaire (30, 150) individuelle et les deux dentures (113, 123), pour un même nombre de dents, possèdent au moins une denture, qui comporte un déport de profil positif ou négatif, **caractérisé en ce que**
   - le nombre total $P_{ges}$ des planétaires (110, 111) est plus grand que le nombre de dents différentiel $Z_{Diff}$,
   - pour un nombre partiel $p_v$ du nombre total $P_{ges}$

des planétaires (110, 111) avec $p_v = P_{ges} - Z_{Diff}$. les dentures séparées respectives par planétaire (111) sont pivotées d'un angle de déport $\delta$ en direction périphérique, derrière chaque planétaire (110) sans pivotement de denture, respectivement l'une derrière l'autre, par rapport à la précédente,
   - l'angle de déport $\delta$ est obtenu à partir de la formule
   - $\delta = \tau * (Z_{Diff}/ P_{ges}) * (Z_{S1}/Z_{p1})$ avec $\tau$ en tant qu'angle de pas de la première roue solaire (30), Zsi en tant que nombre de dents de la roue solaire (30) disposée solidaire en rotation et $Z_{p1}$ en tant que nombre de dents des planétaires (110, 111), et
   - pour minimiser le jeu de denture, deux roues dentées voisines l'une de l'autre ou s'engrenant l'une avec l'autre du train épicycloïdal sont disposées pouvant être déplacées l'une par rapport à l'autre, indépendamment des phénomènes de mouvement réguliers propres à la technique des engrenages.

2. Système d'entraînement selon la revendication 1, **caractérisé en ce que** les planétaires (110, 111) sont logés de façon élastique dans la moulure périphérique (50) radialement avec un écart angulaire de ± 15 degrés angulaires par rapport à l'axe médian principal (9) du système d'entraînement.

3. Système d'entraînement selon la revendication 1, **caractérisé en ce que** pour au moins deux planétaires (110, 111) logés dans une moulure périphérique (50), au moins un (111) des planétaires (110, 111) est composé de deux parties planétaires (112, 122) et une des parties planétaires (112) est contrainte de façon élastique en rotation l'une contre l'autre (122) autour de son axe médian (71, 72).

4. Système d'entraînement selon la revendication 1, **caractérisé en ce que** pour au moins deux planétaires (110, 111) logés dans une moulure périphérique (50), au moins un des planétaires peut être déplacé de plusieurs secondes ou minutes angulaires en direction périphérique sur un cercle avec l'intervalle axial régulier par rapport aux roues solaires (30, 150).

5. Système d'entraînement selon la revendication 3, **caractérisé en ce qu'**au moins deux roues dentées s'engrenant (112, 30 ; 122, 150), qui possèdent respectivement des axes médians parallèles et une denture conique, sont disposées pouvant se déplacer axialement l'une contre l'autre.

6. Système d'entraînement selon la revendication 1, **caractérisé en ce que** la transformation du train épicycloïdal est calculée à partir d'un quotient, dont le dividende est le nombre de dents de la roue solaire entraînante (150), alors que le diviseur de celui-ci est la différence entre le nombre de dents de la roue solaire (30) disposée solidaire en rotation et la deuxième roue solaire entraînante (150).

7. Système d'entraînement selon la revendication 1, **caractérisé en ce que** le planétaire individuel (110, 111) est composé de deux parties planétaires (112, 122) disposées de façon coaxiale, qui sont reliées entre elles de façon rigide.

8. Système d'entraînement selon la revendication 1, **caractérisé en ce qu'**il comporte les paliers à roulement (21, 55, 56, 77) et ceux-ci possèdent un jeu de coussinet du groupe de jeux de coussinets C2 conforme à la norme DIN 620/T4.

**Fig. 1**

**Fig. 2**

**Fig. 3**

113 112 63 123 122 50 61 62 65 41 42 13

24 25 7 64 65 67 29 28 27 32 26 35 36 141 142 145 140

10 11 12 40 43 15 17 18 14 16 168 21 167 163 165 161

77 119 30 150 162 55 51 45 46 22

58 57 52 56 164 23

**Fig. 7**

132 131 130 114 133 124 125

69 112 129 116 122 126 111

117 118 130 129

**Fig. 8**

**Fig. 9**

118 130 67

113

123

92 97 90 91 101 93

95 96 94

**Fig. 6**

**Fig. 4**

**Fig. 5**

**Fig. 10**

**Fig. 12**

**Fig. 11**

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3941719 A1
- US 6705970 B2

- JP H08170695 A